# EUROPÄISCHE PATENTSCHRIFT

(11) **EP 0 518 913 B1**
(45) Veröffentlichungstag und Bekanntmachung des Hinweises auf die Patenterteilung: **28.12.1994**
(21) Anmeldenummer: 91905122.7
(22) Anmeldetag: 02.03.1991
(51) Int. Cl.: A63B 43/00

(54) **VORRICHTUNG MIT EINER SIGNALEMPFANGSEINHEIT ZUM ORTEN VON GOLFBÄLLEN**
DEVICE WITH A SIGNAL-RECEIVING UNIT FOR LOCATING GOLF BALLS
DISPOSITIF DOTE D'UNE UNITE DE RECEPTION DE SIGNAUX DESTINE A LOCALISER LES BALLES DE GOLF

(30) Priorität: 09.03.1990 DE 4007454
(43) Veröffentlichungstag der Anmeldung: 23.12.1992
(73) Patentinhaber: IPU INT. PATENT UTILIZATION LTD., Jersey (GB)
(72) Erfinder: ENGLMEIER, Martin, D-8071 Lenting (DE)
(74) Vertreter: Rotermund, Hanns-Jörg, Dipl.-Phys.
(86) Internationale Anmeldenummer: EP9100395
(87) Internationale Veröffentlichungsnummer: WO9113655

(56) Entgegenhaltungen:
- WO-A-89/02768
- FR-A- 2 616 335
- GB-A- 1 172 449
- US-A- 3 782 730

## Beschreibung

Die Erfindung betrifft eine Vorrichtung zum Orten vom Golfbällen mit einer im Golfball angeordneten Sendeeinheit, die elektromagnetische Ortungssignale abgeben kann, einem ebenfalls im Golfball untergebrachten Speicherkondensator, der als Energiespeicher für die Sendeeinheit dient, einem im Golfball angeordneten Energieempfänger und einem externen Energiesender, der mit dem Energieempfänger drahtlos zusammenwirkt, um den Speicherkondensator für eine zeitlich beschränkte Betriebsdauer der Sendeeinheit zu laden, einer auf die Ortungssignale reagierenden, tragbaren bzw. mobilen Signalempfangseinheit und einer zugehörigen Auswerteschaltung zur Erzeugung von richtungsabhängigen Signalen zur Lokalisierung des Golfballes.

Aus der WO-A 89/02768 ist eine entsprechende Vorrichtung bekannt. Zwar kann damit ein verschlagener Golfball im Prinzip leicht wieder aufgefunden werden. Jedoch bleibt unberücksichtigt, daß die Suche eines Golfballes durch die Ortungssignale anderer Golfbälle erschwert werden kann. Es muß nämlich berücksichtigt werden, daß von relativ vielen Spielern verschlagene Golfbälle auch bei Vorhandensein einer entsprechenden Suchvorrichtung zur Lokalisierung des verschlagenen Balles einfach im Gelände liegengelassen werden. Dies führt dazu, daß immer eine relativ große Anzahl von Bällen im Gelände liegt, welche entsprechend der jeweiligen Restkapazität der die Sendeeinheiten der Bälle versorgenden Energiespeicher Ortungssignale mit abnehmender Intensität aussenden, welche bei der Suche eines frisch verschlagenen Balles erheblich stören können.

Ähnliche Probleme treten bei Vorrichtungen gemäß der GB-A 11 72 449 auf. Nach dieser Druckschrift kann die im Ball angeordnete Sendeeinheit als Reflektor für Hochfrequenzsignale ausgebildet sein, die in einem externen Detektor erzeugt werden, der daraufhin die vom ballseitigen Reflektor zurückgeworfenen Signale empfängt und zur Lokalisierung des Golfballes auswertet. Die ballseitige Sendeeinheit ist also als passiver Sender ausgebildet, der seine Betriebsenergie aus einem Hochfrequenzfeld zieht. Ein ähnliches System wird auch im DE-U 87 09 503 beschrieben. Hier bestehen die ballseitigen Reflektoren jeweils aus einer zweiteiligen Folienantenne, zwischen deren inneren Enden eine Varaktordiode geschaltet ist, die eine Frequenzverdoppelung des reflektierten Hochfrequenzsignales bewirkt.

Alle derartigen Systeme, bei denen der Golfball einen passiven Sender enthält, besitzen jedoch den Nachteil, daß ein verschlagener Golfball, der auf dem Golfplatz liegengeblieben ist, d.h. vergessen oder nicht gesucht wurde, sofort erneut sendeaktiv wird, wenn ein Detektor in Betrieb genommen wird. Dadurch kann das Auffinden eines weiteren verschlagenen Golfballes unmöglich gemacht bzw. sehr erschwert werden.

In der GB-A 11 72 449 wird sogar vorgeschlagen, Golfbälle mit radioaktivem Material zu versetzen, deren Halbwertszeit die normale Lebensdauer eines Golfballes bei weitem übersteigt. Derartige Golfbälle lassen sich zwar im Prinzip mit auf radioaktive Strahlung ansprechenden Detektoren auffinden. Jedoch wird das Aufsuchen eines bestimmten Golfballes erheblich durch weitere gegebenenfalls im Gelände liegende Golfbälle erschwert, da alle verschlagenen Bälle in grundsätzlich gleicher Weise radioaktiv sind.

Deshalb ist es Aufgabe der Erfindung, die Vorrichtung der eingangs angegebenen Art weiterzuentwickeln, derart, daß bei einfachster Handhabung auch bestimmte einzelne Golfbälle weitestgehend ohne Störung durch die Signale anderer Golfbälle aufgefunden werden können.

Diese Aufgabe wird erfindungsgemäß dadurch gelöst, daß der Energiesender einen mit vorgegebener Frequenz arbeitenden Schwingkreis aufweist und der Energieempfänger als ein auf diese Frequenz abgestimmter Resonanzkreis aufgebaut ist, welcher sich mit dem Golfball in unmittelbare räumliche Nachbarschaft des Energiesenders bringen läßt, und daß die Sendeeinheit unmittelbar nach dem Laden des Energiespeichers mit dem Aussenden von Sendesignalen beginnt und den Energiespeicher nach vorgegebener Entladedauer entlädt.

Da als Energiespeicher im Ball ein Kondensator angeordnet ist und die Elemente zur drahtlosen Übertragung elektrischer Energie zwischen der externen Energiesendeeinheit und dem ballseitigen Energieempfänger auf Resonanz abgestimmt sind und sich der Energieempfänger darüber hinaus in enge räumliche Nachbarschaft zum Energiesender bringen läßt, ist eine praktisch beliebig schnelle - und beliebig häufige - Aufladung des ballseitigen Energiespeichers möglich. Dementsprechend kann bei der Erfindung der Energiespeicher des Balles unmittelbar vor dessen Abschlag aufgeladen werden.

Andererseits kann ein Kondensator auch beliebig schnell entladen werden, so daß die Möglichkeit besteht, die gespeicherte Energie unter Erzeugung starker Ortungssignale in gewünschter kurzer Zeit aufzubrauchen.

Somit wird bei der Erfindung ermöglicht, die Aussendung der Ortungssignale des Balles durch eine Schnellstladung des Speicherkondensators "einzuschalten" und die Aussendung dieser Signale allein durch Entladung des Kondensators beim Sendebetrieb wieder "auszuschalten". Besondere Ein- bzw. Ausschaltelemente erübrigen sich.

Die elektrische Kopplung zwischen dem Energiesender und dem Energieempfänger kann induktiv oder kapazitiv erfolgen.

Gemäß einer bevorzugten Ausführungsform der Erfindung kann vorgesehen sein, daß zur Steuerung der Signalempfangseinheit und des Energiesenders der Ladeschaltung eine monostabile Kippstufe derart zugeordnet ist, daß nur während des instabilen Zustandes der monostabilen Kippstufe der Energiesender aktiv und die Signalempfangseinheit inaktiv ist, und daß umgekehrt nur während des stabilen Zustandes der monostabilen Kippstufe die Signalempfangseinheit empfangsbereit ist. Damit wird in konstruktiv vorteilhafter Weise gewährleistet, daß die Signalempfangseinheit nach dem Ende der Ladephase sofort in Betrieb geht und der Ball nach Aufladung des Speicherkondensators sofort durch die Signalempfangseinheit detektiert werden kann.

Gemäß einer weiteren bevorzugten Ausführungsform der Erfindung wird die Sendeeinheit von einer an den Energiespeicher angeschlossenen Steuereinheit derart angesteuert, daß die Sendeeinheit getaktete Sendesignale erzeugt. Infolgedessen weist eine solche Vorrichtung einen geringen Strombedarf auf, womit auch der Energiespeicher nur auf einen geringen Energiebedarf hin dimensioniert zu werden braucht.

Eine solche Steuereinheit wird bei einer bevorzugten Weiterbildung der Erfindung dadurch realisiert, daß die Steuereinheit aus einer astabilen Kippstufe und einer nachgeschalteten Differenzierstufe aufgebaut ist, wobei ein von der astabilen Kippstufe erzeugtes Rechtecksignal der Differenzierstufe zugeführt wird und ein zur Taktung der Sendeeinheit vorgesehener Transistorschalter von dem Ausgangssignal der Differenzierstufe gesteuert wird. Hierdurch ist ein für die Taktung erforderliches einfaches Schaltungskonzept gegeben.

Um gleichzeitig mehrere Golfbälle orten zu können, ist bei einer besonders bevorzugten Ausführungsform der Erfindung für die Sendeeinheiten eine gewisse Anzahl von Sendefrequenzen vorgesehen, wobei werksseitig gebildeten Gruppen von Golfbällen jeweils eine dieser Sendefrequenzen derart Zugeordnet sind, daß die Sendeeinheiten der zu einer Gruppe gehörenden Golfbällen jeweils auf der gleichen Frequenz senden und ferner jeder Golfball eine Kennung zur Identifizierung der Sendefrequenz aufweist. Hierzu sind die Empfangsfrequenzen der Signalempfangseinheiten auf diese Sendefrequenzen einstellbar.

Ferner ergibt sich zur gleichzeitigen Ortung mehrerer Golfbälle eine weitere vorteilhafte Ausführungsform der Erfindung dadurch, daß die Ladesignale des Energiesenders codiert sind und durch diese Codierung unterschiedliche Sendefrequenzen der Sendeeinheit einstellbar sind, wobei die Empfangsfrequenz der Signalempfangseinheit jeweils darauf abstimmbar ist. Eine Weiterbildung dieser Ausführungsform besteht darin, daß zur Decodierung der codierten Ladesignale und zur Sendefrequenzeinstellung an der Sendeeinheit ein Mikroprozessor vorgesehen ist und daß dieser Mikroprozessor einen Decodierer, einen programmierbaren Frequenzteiler und einen PLL-Schaltkreis ansteuert.

Zum schnellen Auffinden eines Golfballes stellt gemäß dem Patentanspruch 13 das Ausgangssignal der Auswerteschaltung ein von der Feldstärke des empfangenen Sendesignals abhängiges Signal dar, wobei der Wert dieser Feldstärke von der Orientierung einer der Signalempfangseinheit zugeordneten Antenne und deren Entfernung vom zu suchenden Golfball abhängt.

Insbesondere kann zur besseren Feststellung der Richtcharakteristik des Sendesignales die Signalempfangseinheit bei einer anderen vorteilhaften Fortbildung der Erfindung mit einem Mehrantennen-Diversity-System ausgerüstet werden, wobei gemäß einer weiteren Fortbildung dieser Ausführungsform die Anzeigeeinheit unabhängig von der Orientierung der Antennen die Richtung angibt, in der der zu suchende Golfball sich befindet.

Des weiteren ist die Anzeigeeinheit bei einer günstigen Ausführungsform der Erfindung so ausgestaltet, daß sie optische und/oder akustische Signale abgibt.

Bei einer besonders vorteilhaften Weiterbildung der Erfindung ist der Energiespeicher ein Kondensator.

Schließlich sind bei einer besonders vorteilhaften Ausführungsform der Erfindung die Signalempfangseinheit, die Ladeschaltung und die Ladevorrichtung in einem tragbaren Gehäuse angeordnet, wobei der Golfball die Sendeeinheit mit dem Energieempfänger und dem Energiespeicher und gegebenenfalls die Steuereinheit enthält und daß die Ladevorrichtung zur Aufnahme des Golfballs als Ladeköcher ausgebildet ist.

Im nachfolgenden wird die Erfindung anhand von mehreren Ausführungsbeispielen unter Hinweis auf die Zeichnungen näher erläutert. Es zeigt:
- Figur 1: ein Blockschaltbild eines Ausführungsbeispieles der erfindungsgemäßen Vorrichtung,
- Figur 2: ein Blockschaltbild eines Ausführungsbeispieles einer in einem zu ortenden Golfball untergebrachten Schaltung mit einer Sendefrequenzeinstellung,
- Figur 3: eine schematische Darstellung eines Golfballes mit einer Elektronik gemäß der erfindungsgemäßen Vorrichtung, und
- Figur 4: eine perspektivische Darstellung eines Ausführungsbeispieles der erfindungsgemäßen Vorrichtung.

In den Figuren sind einander entsprechende Teile mit den gleichen Bezugszeichen versehen.

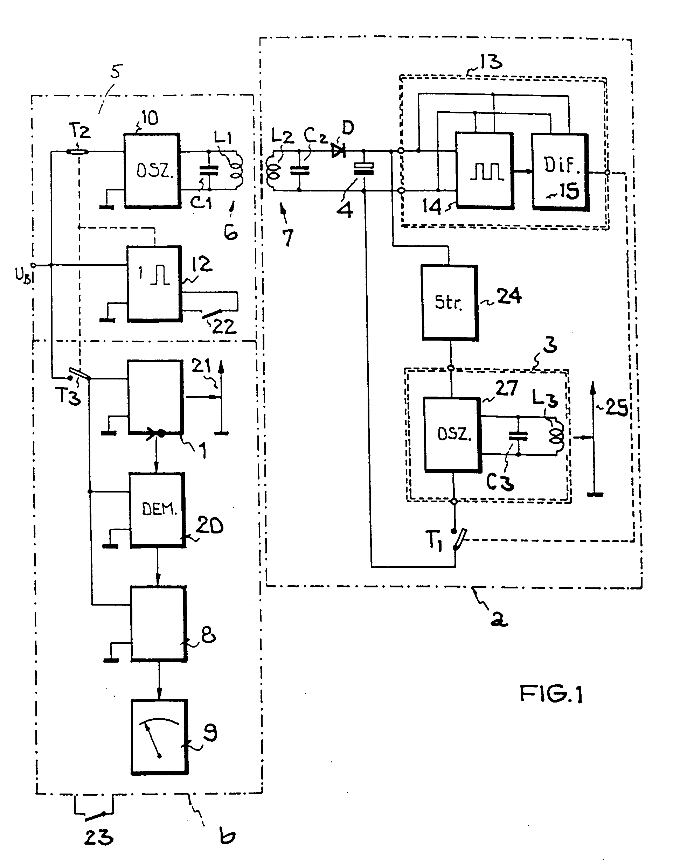

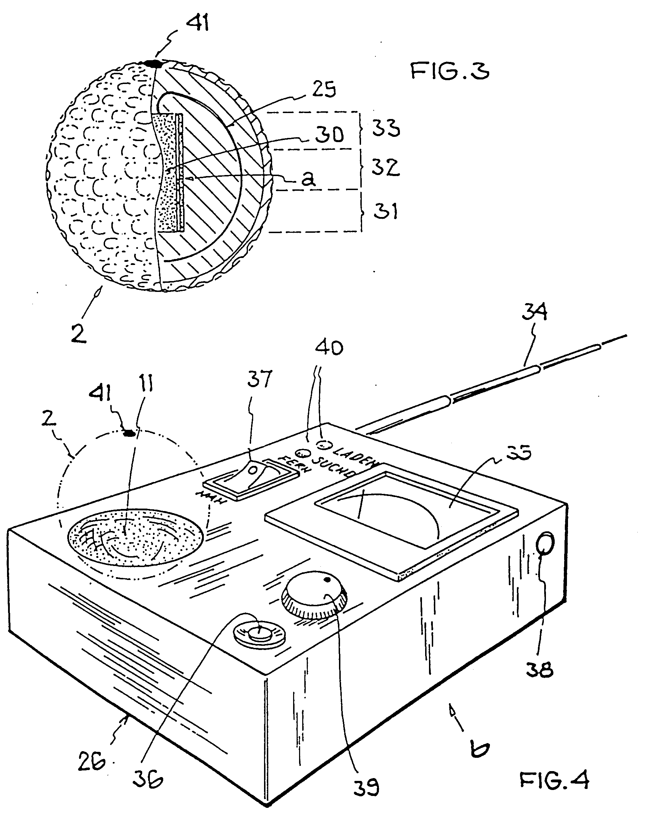

Die Figur 1 zeigt zwei Blockschaltbilder, die jeweils mit einer durchgezogenen Linie umrandet sind und mit den Bezugszeichen a bzw. b bezeichnet sind. Die Schaltungsanordnung a wird dem zu ortenden Golfball 2 gemäß der Figur 3 aufgenommen, während die Schaltungsanordnung b in einem tragbaren Gehäuse 26 gemäß der Figur 4 aufgebaut ist. Der Golfball gemäß der Figur 3 sowie dieses Handgerät 26 werden weiter unten beschrieben. Zunächst soll zuerst die Schaltungsanordnung b erläutert werden. Dort ist in dem oberen Teil des die Schaltungsanordnung b umrandenden Rechtecks eine Ladeschaltung 5 dargestellt, die aus einem Energiesender 6, Oszillator 10 und einer monostabilen Kippstufe 12 aufgebaut ist. Der Energiesender 6 ist als Schwingkreis mit einer Schwingkreisspule L1 und einem Schwingkreiskondensator C1 aufgebaut und ist auf eine bestimmte Ladefrequenz abgestimmt. Der Energiesender 6 wird gemäß der Figur 1 von dem Oszillator 10 gespeist. Dieser Oszillator 10 ist über einen Transistorschalter T2 mit einer Betriebsspannungsquelle U_{B} verbunden, der seinerseits von der monostabilen Kippstufe 12 angesteuert wird, die ihrerseits über einen Schalter 22 einen Steuerimpuls erhält. Hierdurch fällt diese Kippstufe 12 in ihren instabilen Zustand, wodurch der Transistorschalter T2 den Oszillator 10 mit der Betriebsspannungsquelle U_{B} verbindet, mit der Folge, daß der Energiesender 6 mit dem Senden von Ladesignalen beginnt. Fällt die monostabile Kippstufe wieder in ihre stabile Ausgangslage zurück, wird der Oszillator 10 von der Betriebsspannungsquelle getrennt und über einen weiteren Transistorschalter T3 eine Signalempfangseinheit 1 und deren nachgeschalteten Komponenten mit den Bezugszeichen 8 und 20 mit der Betriebsspannungsquelle U_{B} verbunden. Diese Schaltungskomponenten sind in dem unteren Teil des die Schaltungsanordnung b umrandenden Rechtecks dargestellt. Somit geht unmittelbar nach der Ladephase die Signalempfangseinheit 1 auf Empfang.

Die von dem Energiesender 6 abgestrahlte Energie wird von einem Energieempfänger 7 der Schaltungsanordnung a empfangen, der als Resonanzkreis mit einer Schwingkreisspule L2 und einem Schwingkreiskondensator C2 als Parallelkreis aufgebaut ist. Dem Schwingkreiskondensator C2 ist über eine Gleichrichterdiode D ein weiterer Kondensator parallelgeschaltet, der als Speicherkondensator 4 zur Speicherung der empfangenen Energie nach einer Gleichrichtung durch die Gleichrichterdiode D dient. Dieser Energiespeicher 4 dient dann als Betriebsspannungsquelle für die nachgeschalteten Komponenten, in diesem Fall einer Steuereinheit 13 und einer Konstantstromquelle 24. Während der Ladephase des Speicherkondensators 4 sind der Energiesender 6 und der Energieempfänger 7 räumlich benachbart angeordnet, was in der Figur 1 durch eine zeichnerische Nachbarschaft dieser beiden Parallelkreise angedeutet ist. In der praktischen Ausführung wird dies anhand der Figur 4 weiter unten erläutert werden. Durch eine solche Anordnung dieser beiden Schwingkreise ergeben sich in vorteilhafter Weise reproduzierbare Ladeverhältnisse.

Sobald der Energiespeicher 4 aufgeladen ist, beginnen die nachgeschalteten Komponenten 13 und 24 und insbesondere die Sendeeinheit 3 zu arbeiten, d. h. über die Antenne 25 der Sendeeinheit 3 werden Sendesignale abgestrahlt. Die Sendeeinheit 3 ist aus einem Oszillator 27 aufgebaut, der einen Schwingkreis, bestehend aus einem Kondensator C3 und einer Spule L3, ansteuert. Der Oszillator 27 ist mit der Konstantstromquelle 24 verbunden, die trotz einer abnehmenden Betriebsspannung den Oszillator 27 mit einem Konstantstrom versorgt. Der Oszillator 27 ist ferner über einen Transistorschalter T1 mit dem Speicherkondensator 4 verbunden, um zwecks Energieeinsparung ein getaktetes Sendesignal zu erzeugen. Deshalb wird der Schaltertransistor T1 mit von der Steuereinheit 13 erzeugten Taktimpulsen angesteuert. Diese Steuereinheit 13 umfaßt eine astabile Kippstufe 14 und einer dieser nachgeschalteten Differenzierstufe 15. Der Ausgang dieser Differenzierstufe 15 ist mit dem Transistorschalter T1 verbunden. Zur Energieversorgung ist diese astabile Kippstufe 14 als auch die Differenzierstufe 15 mit dem Energiespeicher 4 verbunden, während auch der Signaleingang der astabilen Kippstufe 14 ebenfalls an diesen Speicherkondensator 4 angeschlossen ist. Am Ausgang der astabilen Kippstufe 14 steht eine rechteckförmige Schwingung mit einem Tastverhältnis von beispielsweise 1:1 zur Verfügung, die von der Differenzierstufe 15 zur Erzeugung von kurzen Impulsen differenziert wird.

Die von der Sendeantenne 25 abgestrahlten getakteten Sendesignale werden von einer Empfangsantenne 21 der Signalempfangseinheit 1 der Schaltungsanordnung b empfangen. Dieser Signalempfangseinheit 1 ist ein Demodulator 20 und eine Auswerteeinheit 8 nachgeschaltet, wobei diese genannten Komponenten von einer Betriebsspannungsquelle U_{B} versorgt werden. Die Auswerteschaltung 8 enthält eine Sample-Hold-Schaltung, der das demodulierte Signal des Demodulators 20 zugeführt wird. Das von dieser Auswerteeinheit 8 erzeugte Signal ist direkt proportional zu dem Wert der empfangenen Feldstärke. Da als Antenne 21 eine Stabantenne eingesetzt wird, ergibt sich ein richtungsabhängiges Signal, das einem der Auswerteeinheit 8 nachgeschalteten Meßgerät 9 zugeführt wird. Dieses als Ortungsanzeige dienende Meßinstrument ist beispielsweise ein Drehspulinstrument. Über einen Schalter 23 wird die Schaltungsanordnung b in Betrieb genommen.

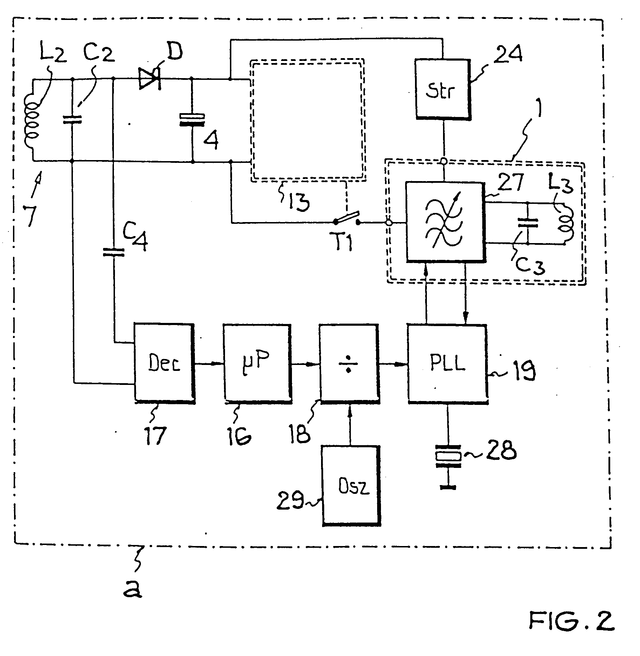

Die Figur 2 zeigt eine Schaltungsanordnung a mit der Möglichkeit, bestimmte Sendefrequenzen einzustellen, um hierdurch verschiedene Golfbälle gleichzeitig detektieren zu können. Dies wird dadurch realisiert, daß das Ladesignal des Energiesenders 6 ein codiertes Ladesignal, beispielsweise PCM-moduliert, darstellt. Dieses von dem Energieempfänger 7 aufgenommene Ladesignal wird gemäß der Figur 2 an dem Schwingkreiskondensator C2 abgegriffen und über einen Koppelkondensator C4 einem Decodierer 17 zugeführt. Ein Mikroprozessor 16 wertet die decodierten Signale aus und steuert seinerseits einen programmierbaren Frequenzteiler 18 entsprechend der in dem empfangenen Ladesignal codierten Frequenz. Der von einem Oszillator 29 versorgte programmierbare Frequenzteiler 18 steuert eine PLL-Schaltung 19 an, die ihrerseits den spannungsgesteuerten Oszillator 27 der Sendeeinheit 1 ansteuert. Die PLL-Schaltung 19 wird von einem Schwingquarz 28 mit einer Bezugsfrequenz versorgt. Zur Erzeugung von PCM-modulierten Ladesignalen durch die Ladeschaltung 5 enthält diese entsprechende Schaltungsmittel, die dem Fachmann an sich bekannt sind und deshalb hier nicht weiter erläutert werden sollen. In gleicher Weise enthält die Signalempfangseinheit 1 der Schaltungsanordnung b Einstellmöglichkeiten zum Empfang der verschiedenen Frequenzen.

In Figur 3 ist nun ein Golfball 2 dargestellt, der eine Elektronik 30 enthält, die der Schaltungsanordnung a gemäß der Figur 1 oder der Figur 2 entspricht. Diese Elektronik 30 ist gemäß den Bezugszeichen 31, 32 und 33 in drei verschiedene Funktionsbereiche aufgeteilt. Der Bereich 31 enthält den Energieempfänger, der Bereich 32 dient der Energiespeicherung und der Bereich 33 enthält die Sendeeinheit mit den zugehörigen Komponenten. Ferner ist auch die als Draht ausgeführte Sendeantenne 25 dargestellt. Diese Elektronik 30 ist mit ihrer Antenne 25 in der innersten Schicht des Golfballes 2 eingegossen, wobei dieser innere Kern zusätzlich von mehreren Schichten umschlossen wird. Ein Markierungspunkt 41 auf der Oberfläche des Golfballes stellt den Ort dar, der dem Energieempfänger 7 der Schaltungsanordnung a gegenüberliegt. Der Sinn dieser Markierung 41 wird weiter unten im Zusammenhang mit der Figur 4 erläutert.

Die Figur 4 zeigt nun ein Ausführungsbeispiel eines Suchgerätes zum Auffinden eines Golfballes 2 gemäß der Figur 3. Dieses Suchgerät ist als tragbares rechteckförmiges Gehäuse 26 ausgebildet und enthält eine Schaltungsanordnung b gemäß der Figur 1. Für den Aufladevorgang wird ein Golfball der in Figur 3 gezeigten Art in eine dafür vorgesehene Öffnung 11, den Aufladeköcher gelegt. Dabei ist zu beachten, daß die auf dem Golfball befindliche Markierung 41 nach oben zeigt, womit garantiert ist, daß der Energieempfänger in dem Bereich 31 des Golfballes 2 sich in unmittelbarer räumlicher Nachbarschaft zu dem auf dem Grund des Ladeköchers 11 befindlichen Energiesender 6 befindet. Nun wird das Suchgerät über eine Ein-/Austaste 36 in Betrieb genommen, wodurch der Ladevorgang automatisch abläuft und beispielsweise 6 Sekunden dauert. Während des Ladevorganges leuchtet eine auf der Stirnseite dem Gehäuses 26 angeordnete Ladeanzeige 40 auf. Nach Ladeschluß schaltet sich automatisch die Signalempfangseinheit ein, wobei dies ebenfalls durch die Empfängeranzeige 40 angezeigt wird. Wurde der Ladevorgang ordnungsgemäß durchgeführt, zeigt das Meßinstrument 35, das nun als Feldstärkeinstrument arbeitet, sofort die Signalabgabe des Balles an. Anschließend kann der Ball aus dem Aufladeköcher 11 entnommen werden und für den Suchvorgang im Gelände plaziert werden. Die Signalabgabe des Golfballes ist ca. 15 Minuten nach Ladeschluß wirksam, wobei für den Ladekondensator 4 der Schaltungsanordnung a gemäß der Figur 1 oder der Figur 2 ein Kondensator von 100 µF gewählt wurde. Die entsprechende Ladefrequenz liegt bei ca. 1 MHz.

Für den Suchvorgang bleibt das Suchgerät nach der Aufladung des Golfballes eingeschaltet. Eine Teleskopantenne 34 wird voll ausgezogen und ein Empfindlichkeitsschalter 37 auf "Fern", d. h. auf eine höchste Empfindlichkeitsstufe gestellt. Nun beginnt die Anzeige am Meßinstrument 35 auszuschlagen. Mit einem Abstimmknopf 39 kann der Ausschlag der Anzeige auf maximalen Anzeigewert (Optimumssuche) eingestellt werden. Zunächst kann durch Drehen des gesamten Suchgerätes und der Suchperson die grobe Richtung bestimmt werden, in der sich der Golfball befindet. Durch langsames Vorwärtsgehen in diese Richtung wird der Ausschlag der Anzeige zunehmen. Sollte während der Annäherung an den Ball der Meßbereich überschritten werden, so ist der Empfindlichkeitsschalter 37 in eine Stellung "Nah" zu bringen. Der Zeiger des Meßinstrumentes 35 kann sich hierdurch wieder auf der Skala bewegen und die Suche des Golfballes kann weitergeführt werden. Nach erfolgreicher Suche des Golfballes wird das Suchgerät über den Schalter 36 abgeschaltet. Nach dem Wiedereinschalten dieses Schalters 36 kann sofort die Aufladung des nächsten Golfballes beginnen. Das Suchgerät gemäß der Figur 4 enthält ferner eine Lautsprecherbuchse 38, an die ein Kopfhörer anschließbar ist, der bei Annäherung des Suchgerätes an den Golfball 2 sich verstärkende kurze Tonsignale abgibt.

Damit mehrere Spieler auf einem Golfplatz gleichzeitig ihre verschlagenen Golfbälle suchen können, ist es notwendig, daß diese auf verschiedenen Frequenzen senden. Hierzu werden werksseitig gebildeten Gruppen von Golfbällen jeweils eine andere Sendefrequenz zugeordnet, so daß die Sendeeinheiten der zu einer Gruppe gehörenden Golfbälle jeweils auf der gleichen Frequenz senden. Zur Unterscheidung der einzelnen Gruppen weisen die Golfbälle auf ihrer Oberfläche eine Kennung auf, die gleichzeitig die Sendefrequenz angibt. Das Suchgerät umfaßt eine Einrichtung, mit der die Signalempfangseinheit auf die entsprechende Frequenz eingestellt werden kann.

## Patentansprüche

1. Vorrichtung zum Orten von Golfbällen (2) mit
- einer im Golfball (2) angeordneten Sendeeinheit (3), die elektromagnetische Ortungssignale abgeben kann,
- einem ebenfalls im Golfball (2) untergebrachten Speicherkondensator (4), der als Energiespeicher für die Sendeeinheit (3) dient,
- einem im Golfball (2) angeordneten Energieempfänger (7) und
- einem externen Energiesender, der mit dem Energieempfänger (7) drahtlos zusammenwirkt, um den Speicherkondensator (4) für eine zeitlich beschränkte Betriebsdauer der Sendeeinheit (3) zu laden,
- einer auf die Ortungssignale reagierenden, tragbaren bzw. mobilen Signalempfangseinheit (1) und
- einer zugehörigen Auswerteschaltung (8) zur Erzeugung von richtungsabhängigen Signalen zur Lokalisierung des Golfballes (2),
dadurch gekennzeichnet,
daß der Energiesender (6) einen mit vorgegebener Frequenz arbeitenden Schwingkreis (C₁,L₁) aufweist und der Energieempfänger (7) als ein auf diese Frequenz abgestimmter Resonanzkreis (C₂,L₂) aufgebaut ist, welcher sich mit dem Golfball (2) in unmittelbare räumliche Nachbarschaft des Energiesenders (6) bringen läßt,und daß die Sendeeinheit (3) unmittelbar nach dem Laden des Energiespeichers (4) mit dem Aussenden von Sendesignalen beginnt und den Energiespeicher (4) nach vorgegebener Entladedauer entlädt.

2. Vorrichtung nach Anspruch 1,
dadurch gekennzeichnet,
daß der Speicherkondensator (4) als Betriebsspannungsquelle einer die Sendeeinheit (3) versorgenden Konstantstromquelle (24) angeordnet ist.

3. Vorrichtung nach Anspruch 1 oder 2,
dadurch gekennzeichnet,
daß der Energiesender (6) und der Energieempfänger (7) auf eine Ladefrequenz von ca. 1 MHz abgestimmt sind.

4. Vorrichtung nach einem der Ansprüche 1 bis 3,
dadurch gekennzeichnet,
daß der Resonanzkreis (C₂,L₂) des Energieempfängers (7) mit einem Gleichrichterelement (D) derart verbunden ist, daß die vom Resonanzkreis (C₂,L₂) aufgenommene elektrische Energie gleichgerichtet und dem Speicherkondensator (4) zugeführt wird.

5. Vorrichtung nach Anspruch 1,
dadurch gekennzeichnet,
daß die elektrische Kopplung zwischen dem Energiesender (6) und dem Energieempfänger (7) induktiv oder kapazitiv erfolgt.

6. Vorrichtung nach einem der vorangehenden Ansprüche,
dadurch gekennzeichnet,
daß zur Steuerung der Signalempfangseinheit (1) und des Energiesenders (6) der Ladeschaltung (5) eine monostabile Kippstufe (12) zugeordnet ist, daß nur während des instabilen Zustandes der monostabilen Kippstufe (12) der Energiesender (6) aktiv und die Signalempfangseinheit (1) inaktiv ist und daß umgekehrt nur während des stabilen Zustandes der monostabilen Kippstufe (12) die Signalempfangseinheit (1) empfangsbereit ist.

7. Vorrichtung nach einem der vorangehenden Ansprüche, dadurch gekennzeichnet, daß die Sendeeinheit (3) von einer an den Energiespeicher (4) angeschlossenen Steuereinheit (13) derart angesteuert wird, daß die Sendeeinheit (3) getaktete Sendesignale erzeugt.

8. Vorrichtung nach Anspruch 7, dadurch gekennzeichnet, daß die Steuereinheit (13) aus einer astabilen Kippstufe (14) und einer nachgeschalteten Differenzierstufe (15) derart aufgebaut ist, daß ein von der astabilen Kippstufe (14) erzeugtes Rechtecksignal der Differenzierstufe (15) zugeführt wird und daß ein zur Taktung der Sendeeinheit (3) vorgesehener Transistorschalter (T₁) von dem Ausgang der Differenzierstufe (15) gesteuert wird.

9. Vorrichtung nach einem der vorangehenden Ansprüche, dadurch gekennzeichnet, daß für die Sendeeinheiten (3) eine gewisse Anzahl von Sendefrequenzen vorgesehen sind, daß werksseitig gebildete Gruppen von Golfbällen (2) jeweils eine dieser Sendefrequenzen derart zugeordnet werden, daß die Sendeeinheiten (3) der zu einer Gruppe gehörenden Golfbälle (2) jeweils auf der gleichen Frequenz senden, daß jeder Golfball eine Kennung zur Identifizierung der Sendefrequenz aufweist und daß die Empfangsfrequenz der Signalempfangseinheiten (1) auf diese Sendefrequenzen einstellbar sind.

10. Vorrichtung nach einem der Ansprüche 1 bis 8, dadurch gekennzeichnet, daß die Ladesignale des Energiesenders (6) codiert sind, daß durch diese Codierung unterschiedliche Sendefrequenzen der Sendeeinheit (3) einstellbar sind und daß die Empfangsfrequenz der Signalempfangseinheit (1) jeweils darauf abstimmbar ist.

11. Vorrichtung nach Anspruch 10, dadurch gekennzeichnet, daß zur Decodierung des codierten Ladesignales und zur Sendefrequenzeinstellung an der Sendeeinheit (3) ein Mikroprozessor (16) vorgesehen ist und daß dieser Mikroprozessor (16) einen Decodierer (17), einen programmierbaren Frequenzteiler (18) und einen PLL-Schaltkreis (19) ansteuert.

12. Vorrichtung nach einem der vorangehenden Ansprüche, dadurch gekennzeichnet, daß das Ausgangssignal der Auswerteschaltung (8) ein von der Feldstärke des empfangenen Sendesignals abhängiges Signal darstellt und daß der Wert dieser Feldstärke von der Orientierung einer der Signalempfangseinheit (1) zugeordneten Antenne (21) und deren Entfernung vom zu suchenden Golfball abhängt.

13. Vorrichtung nach einem der Ansprüche 1 bis 11, dadurch gekennzeichnet, daß die Signalempfangseinheit (1) zur Feststellung der Richtcharakteristik des Endesignals mit einem Mehrantennen-Diversity-System ausgerüstet ist.

14. Vorrichtung nach Anspruch 13, dadurch gekennzeichnet, daß die Anzeigeeinheit (9) unabhängig von der Orientierung der Antennen die Richtung angibt, in der der zu suchende Golfball (2) sich befindet.

15. Vorrichtung nach einem der vorangehenden Ansprüche, dadurch gekennzeichnet, daß die Anzeigeeinheit (9) optische und/oder akustische Signale abgibt.

16. Vorrichtung nach einem der vorangehenden Ansprüche, dadurch gekennzeichnet, daß die Signalempfangseinheit (1), die Ladeschaltung (5) und die Ladevorrichtung (11) in einem tragbaren Gehäuse (26) angeordnet sind, daß der Golfball (2) die Sendeeinheit (3) mit dem Energieempfänger (7) und dem Energiespeicher (4) und gegebenenfalls die Steuereinheit (13) enthält und daß die Ladevorrichtung (11) zur Aufnahme des Golfballes (2) als Ladeköcher ausgebildet ist.

## Claims

1. Apparatus for locating golf balls (2) comprising:
a transmitter unit (3) which is arranged in the golf ball (2) and which can emit the electromagnetic location signals;
a storage capacitor (4) which is also accommodated in the golf ball (2) and which serves as an energy store for the transmitter unit (3);
an energy receiver (7) arranged in the golf ball (2);
an external energy transmitter which cooperates wirelessly with the energy receiver (7) in order to charge the storage capacitor (4) sufficiently for a limited period of operation of the transmitter unit (3);
a portable or mobile signal receiver unit (1) which is responsive to the location signals; and
an evaluation circuit (8) associated therewith for producing direction-independent signals for localising the golf ball (2),
characterised in that the energy transmitter (6) comprises an oscillator circuit (C₁, L₁) operating at a pre-specified frequency and in that the energy receiver (7) is constructed as a resonator circuit (C₂, L₂) matched to this frequency which can be brought with the golf ball (2) into direct proximity to the energy transmitter (6), and in that the transmitter unit (3) starts emitting transmitter signals directly after the charging of the energy store (4) and the energy store (4) discharges after a prespecified discharging time.

2. Apparatus in accordance with claim 1, characterised in that the storage capacitor (4) is arranged as an operational voltage source of a constant current source (24) which supplies the transmitter unit (3).

3. Apparatus in accordance with claim 1 or 2, characterised in that the energy transmitter (6) and the energy receiver (7) are matched to a charging frequency of approximately 1 MHz.

4. Apparatus in accordance with one of claims 1 to 3, characterised in that the resonator circuit (C₂, L₂) of the energy receiver (7) is connected to a rectifier element (D) in such a manner that the electrical energy taken up by the resonator circuit (C₂, L₂) is rectified and supplied to the storage capacitor (4).

5. Apparatus in accordance with claim 1, characterised in that the electrical coupling between the energy transmitter (6) and the energy receiver (7) takes place inductively or capacitively.

6. Apparatus in accordance with one of the preceding claims, characterised in that, for controlling the signal receiver unit (1) and the energy transmitter (6), a univibrator (12) is associated with the charging circuit (5), in that the energy transmitter (6) is active and the signal receiver unit (1) inactive only during the unstable state of the univibrator (12) and in that, conversely, the signal receiver unit (1) is only in a ready-to-receive condition during the stable state of the univibrator (12).

7. Apparatus in accordance with one of the preceding claims, characterised in that the transmitter unit (3) is controlled by a control unit (13), which is connected to the energy store (4), in such a manner that the transmitter unit (3) produces triggered or clocked transmitter signals.

8. Apparatus in accordance with claim 7, characterised in that the control unit (13) is constructed from an astable multivibrator (14) and a differentiator (15) connected thereafter in such a manner that a square wave signal produced by the astable multivibrator (14) is supplied to the differentiator (15) and in that a transistor switch (T₁) provided for triggering or clocking the transmitter unit (3) is controlled from the output of the differentiator (15).

9. Apparatus in accordance with one of the preceding claims, characterised in that a certain number of transmitter frequencies are provided for the transmitter unit (3), in that groups of golf balls (2) which are formed at the factory are each associated with one of these transmitter frequencies in such a manner that the transmitter units (3) of the golf balls (2) belonging to a group each transmit at the same frequency, in that each golf ball has a characteristic for identification of the transmitter frequency and in that the receiver frequency of the signal receiver units (1) are adjustable to this transmitter frequency.

10. Apparatus in accordance with one of claims 1 to 8, characterised in that the charging signals of the energy emitter (6) are coded, in that different transmitter frequencies of the transmitter unit (3) can be set via this coding and in that the receiver frequencies of the signal receiver unit (1) can each be matched thereto.

11. Apparatus in accordance with claim 10, characterised in that a microprocessor (16) is provided for decoding the coded charging signal and for adjusting the transmitter frequency to the transmitter unit (3) and in that this microprocessor (16) controls a decoder (17), a programmable frequency divider (18) and a PLL-circuit (19).

12. Apparatus in accordance with one of the preceding claims, characterised in that the output signal of the evaluation circuit (8) represents a signal which is dependent on the field strength of the transmitter signal received and in that the value of this field strength depends on the orientation of an antenna (21) associated with the signal receiver unit (1) and its distance from the golf ball being sought.

13. Apparatus in accordance with one of the claims 1 to 11, characterised in that the signal receiver unit (1) is equipped with a multi-antenna diversity system for determining the directional characteristic of the end signal.

14. Apparatus in accordance with claim 13, characterised in that the display unit (9) gives the direction in which the golf ball (2) being sought is situated independently of the orientation of the antennae.

15. Apparatus in accordance with one of the preceding claims, characterised in that the display unit (9) gives optical and/or acoustic signals.

16. Apparatus in accordance with one of the preceding claims, characterised in that the signal receiver unit (1), the charging circuit (5) and the charging apparatus (11) are arranged in a portable housing (26), in that the golf ball (2) contains the transmitter unit (3) with the energy receiver (7) and the energy store (4) and optionally the control unit (13), and in that the charging apparatus (11) is formed as a charging receptacle for receiving the golf ball (2).

## Revendications

1. Dispositif pour localiser des balles de golf (2), comportant
- une unité d'émission (3) disposée dans la balle de golf (2) et qui peut délivrer des signaux électromagnétiques de localisation,
- un condensateur accumulateur (4) logé également dans la balle de golf (2) et qui est utilisé comme accumulateur d'énergie pour l'unité d'émission (3),
- un récepteur d'énergie (7) disposé dans la balle de golf (2), et
- un générateur externe d'énergie, qui coopère, sans fil, avec le récepteur d'énergie (7) pour charger le condensateur accumulateur (4) pour une durée de fonctionnement, limitée dans le temps, de l'unité d'émission (3),
- une unité portable mobile de réception de signaux (1), qui réagit aux signaux de localisation, et
- un circuit associé d'évaluation (8) servant à produire des signaux, qui dépendent de la direction, pour localiser la balle de golf (2),
caractérisé en ce
que le générateur d'énergie (6) possède un circuit oscillant (C₁, L₁) travaillant à une fréquence prédéterminée, et que le récepteur d'énergie (7) est constitué sous la forme d'un circuit résonnant (C₂, L₂) réglé sur cette fréquence et qui peut être amené, avec la balle de golf (2), à proximité directe, dans l'espace, du générateur d'énergie (6), et que l'unité d'émission (3) commence à émettre des signaux d'émission immédiatement après la charge de l'accumulateur d'énergie (4) et décharge l'accumulateur d'énergie (4) au bout d'une durée de décharge prédéterminée.

2. Dispositif selon la revendication 1, caractérisé en ce que le condensateur accumulateur (4) est disposé en tant que source de tension de service d'une source de courant constant (24), qui alimente l'unité d'émission (3).

3. Dispositif selon la revendication 1 ou 2, caractérisé en ce que le générateur d'énergie (6) et le récepteur d'énergie (7) sont accordés sur une fréquence de charge d'environ 1 MHz.

4. Dispositif selon l'une des revendications 1 à 3, caractérisé en ce que le circuit résonnant (C₂, L₂) du récepteur d'énergie (7) est relié à un élément redresseur (D) de telle sorte que l'énergie électrique, qui est reçue dans le circuit résonnant (C₂, L₂), est redressée et envoyée au condensateur accumulateur (4).

5. Dispositif selon la revendication 1, caractérisé en ce que le couplage électrique entre le générateur d'énergie (6) et le récepteur d'énergie (7) s'effectue de façon inductive ou capacitive.

6. Dispositif selon l'une des revendications précédentes, caractérisé en ce que, pour la commande de l'unité d'émission de signaux (1) et du générateur d'énergie (6), un étage à bascule monostable (12) est associé au circuit de charge (5), que le générateur d'énergie (6) est actif et l'unité de réception de signaux (1) est inactive uniquement pendant l'état instable de l'étage à bascule monostable (12), et que, inversement, l'unité de réception de signaux (1) est prête pour la réception uniquement pendant l'état stable de l'étage à bascule monostable (12).

7. Dispositif selon l'une des revendications précédentes, caractérisé en ce que l'unité d'émission (3) est commandée par une unité de commande (13) raccordée à l'accumulateur d'énergie (4) de sorte que l'unité d'émission (3) produit des signaux d'émission cadencés.

8. Dispositif selon la revendication 7, caractérisé en ce que l'unité de commande (13) est constituée par un étage à bascule astable (14) et par un étage différentiateur (15) branché en aval, de telle sorte qu'un signal rectangulaire produit par l'étage à bascule astable (14) est envoyé à l'étage différentiateur (15) et qu'un interrupteur à transistor (T₁) prévu pour la commande cadencée de l'unité d'émission (3) est commandé par le signal de sortie de l'étage différentiateur (15).

9. Dispositif selon l'une des revendications précédentes, caractérisé en ce que pour les unités d'émission (3) il est prévu un certain nombre de fréquences d'émission, que des fréquences respectives faisant partie de ces fréquences d'émission sont associées à des groupes, formés en usine, de balles de golf (2) de telle sorte que les unités d'émission (3) des balles de golf (2) faisant partie d'un groupe émettent respectivement sur la même fréquence, que chaque balle de golf possède une caractérisation servant à identifier la fréquence d'émission et que les fréquences de réception des unités de réception de signaux (1) peuvent être réglées sur ces fréquences d'émission.

10. Dispositif selon l'une des revendications 1 à 8, caractérisé en ce que les signaux de charge du générateur d'énergie (6) sont codés, que différentes fréquences d'émission de l'unité d'émission (3) doivent être réglées au moyen de ce codage et que la fréquence de réception de l'unité (1) de réception de signaux peut être accordée respectivement sur ces fréquences.

11. Dispositif selon la revendication 10, caractérisé en ce que pour le décodage du signal de charge codé et pour le réglage de la fréquence d'émission, un microprocesseur (16) est prévu dans l'unité d'émission (3) et que ce microprocesseur (16) commande un décodeur (17), un diviseur de fréquence programmable (18) et un circuit PLL (19).

12. Dispositif selon l'une des revendications précédentes, caractérisé en ce que le signal de sortie du circuit d'évaluation (8) représente un signal, qui dépend de l'intensité de champ du signal d'émission reçu, et que la valeur de cette intensité de champ dépend de l'orientation d'une antenne (21), qui est associée à l'unité de réception de signaux (1), et de la distance par rapport à la balle de golf devant être recherchée.

13. Dispositif selon l'une des revendications 1 à 11, caractérisé en ce que l'unité de réception de signaux (1) est équipée d'un système Diversity à plusieurs antennes pour la détermination de la caractéristique directionnelle du signal d'émission.

14. Dispositif selon la revendication 13, caractérisé en ce que l'unité indicatrice (9) indique, indépendamment de l'orientation des antennes, la direction dans laquelle est situé la balle de golf (2) devant être recherchée.

15. Dispositif selon l'une des revendications précédentes, caractérisé en ce que l'unité indicatrice (9) délivre des signaux optiques et/ou des signaux acoustiques.

16. Dispositif selon l'une des revendications précédentes, caractérisé en ce que l'unité de réception de signaux (1), le circuit de charge (5) et le dispositif de charge (11) sont disposés dans un boitier portable (26), que la balle de golf (2) contient l'unité d'émission (3) équipée du récepteur d'énergie (7) et de l'accumulateur d'énergie (4) et éventuellement l'unité de commande (13), et que le dispositif de charge (11) est agencé sous la forme d'un logement de charge servant à loger la balle de golf (2).
